# EUROPÄISCHE PATENTANMELDUNG

(11) **EP 1 302 930 A1**
(43) Veröffentlichungstag der Anmeldung: **16.04.2003**
(21) Anmeldenummer: 02022805.2
(22) Anmeldetag: 11.10.2002
(51) Int. Cl.: G10L 17/00

(54) **Fortwährende Sprecherauthentifizierung**

(30) Priorität: 11.10.2001 DE 10150108
(71) Anmelder: SIEMENS AKTIENGESELLSCHAFT, 80333 München (DE)
(72) Erfinder: Grashey, Stephan, Dr., 82140 Olching (DE); Kuepper, Wolfgang, Dr., 80796 Muenchen (DE)

(57) **Zusammenfassung**

Die Erfindung betrifft ein Verfahren und eine Anordnung zur Authentifizierung einer Person, wobei die Authentifizierung fortwährend an Sprachsignalen vorgenommen wird, die zu einer Vielzahl von durch die Person gesprochenen Phrasen gehören.

## Beschreibung

Die Erfindung betrifft ein Verfahren zur Authentifizierung einer Person, bei dem die Authentifizierung anhand von Sprachsignalen vorgenommen wird, sowie eine Anordnung, die eingerichtet ist, das Verfahren durchzuführen.

Um beim Telefonieren eine anrufende, unbekannte Person zu identifizieren, gibt es mehrere Möglichkeiten:
- Man überprüft die Telefonnummer des Anrufers durch Ablesen des Telefondisplays oder eventuell durch Rückruf,
- die Person muss ein geheimes Kennwert sagen oder
- die Person muss eine persönliche, nur ihr bekannte PIN (Personal Identification Number), Kundennummer etc. angeben.

Alle diese Verfahren bringen Probleme mit sich. Die Übermittlung der Telefonnummer ist nicht bei allen Telefonpartnern sichergestellt. Kennworte und Kennnummern können gestohlen oder vergessen werden. Die genannten Verfahren überprüfen außerdem nicht die wirkliche Identität der Person, sondern lediglich die Benutzung eines bestimmten Telefonanschlusses oder das Vorhandensein eines bestimmten Wissens bei der Person.

Abhilfe schaffen hier biometrische Verfahren wie beispielsweise die Sprechererkennung. Hier wird die Person am Klang und an der Dynamik ihrer Stimme erkannt. In der üblichen Anwendung der Sprechererkennung muss die Person, typischerweise am Beginn des Gesprächs, einen bestimmten, vorgegebenen Text sprechen. Dies kann beispielsweise die persönliche Kundennummer sein, wobei eine Identifikation über die Kundennummer bei gleichzeitiger Überprüfung der berechtigten Nutzung dieser Nummer über eine Sprecherverifikation stattfindet. Damit ist die Authentifizierung beendet.

Eine derartige Vorgehensweise hat allerdings den Nachteil, dass über eine entsprechend gestaltete Dialogführung sichergestellt werden muss, dass die Person das zur Authentifizierung notwendige Sprachsignal an geeigneter Stelle spricht. Dies behindert eine natürliche Kommunikation.

Davon ausgehend stellt sich die Aufgabe, die Sprechererkennung, insbesondere beim Telefonieren, sicherer zu machen und gleichzeitig den natürlichen Redefluss der zu authentifizierenden Person weniger einzuschränken.

Diese Aufgabe wird durch ein Verfahren und eine Anordnung mit den Merkmalen der unabhängigen Ansprüche gelöst.

Bei dem Verfahren zur Authentifizierung einer Person wird die Authentifizierung anhand von Sprachsignalen vorgenommen. Unter Authentifizierung wird die Identifikation und/oder Verifikation der Person verstanden. Dabei spricht die Person, insbesondere während einer Kommunikation mit einem Kommunikationspartner, eine Vielzahl von Phrasen in Form von Sätzen und/oder eigenständigen Äußerungen, die nicht die grammatische Struktur von Sätzen haben müssen, aber in ihrem inhaltlichen Umfang vergleichbar sind. An den von der Person für die Phrasen gesprochenen Sprachsignalen wird nunmehr fortwährend eine Authentifizierung vorgenommen. Die Sprechererkennung erfolgt also nicht einmalig am Anfang eines Gesprächs, sondern permanent während des laufenden Gesprächs bzw. den von der Person gesprochenen Phrasen.

Die fortwährende Authentifizierung kann bei sehr hohen Sicherheitsanforderungen ununterbrochen erfolgen. In der Regel wird es jedoch ausreichen, die fortwährende Authentifizierung dadurch durchzuführen, dass immer wieder an Abschnitten der Phrasen bzw. Sprachsignale die Authentifizierung der Person vorgenommen wird.

Wie groß diese Abschnitte im Vergleich zu der insgesamt gesprochenen Vielzahl von Phrasen sind, lässt sich vorzugsweise anhand von vorgebbaren Sicherheitsstufen einstellen. Hier ist es beispielsweise denkbar, dass an mindestens 1/10, 1/3, der Hälfte, 2/3, 3/4 oder 4/5 der für die Phrase gesprochenen Sprachsignale eine Authentifizierung vorgenommen wird.

Statt über einen zeitlichen Anteil der Abschnitte lässt sich auch inhaltlich steuern, welche der gesprochenen Sprachsignale bei der fortwährenden Authentifizierung berücksichtigt werden. Ist nämlich die Authentifizierung der Person nur für bestimmte Inhalte erforderlich, so wird die Authentifizierung der Person vorzugsweise anhand der Sprachsignale vorgenommen, die die Inhalte selbst enthalten oder die aus den Inhalten selbst bestehen, die die Authentifizierung der Person erfordern.

Insbesondere wird also die Authentifizierung der Person anhand von Sprachsignalen vorgenommen, die von der Person nicht zum Zwecke der Authentifizierung abgegeben werden.

Bei der fortwährenden Authentifizierung der Person anhand von Sprachsignalen, also bei der fortwährenden Sprechererkennung kann man mit einem vorgegebenen Sprechermodell arbeiten, über das die Person authentifiziert wird oder nicht authentifiziert wird. Das Sprechermodell enthält dazu Referenzmuster, die mit aus den Sprachsignalen durch eine Vorverarbeitung gewonnenen Testmustern verglichen werden.

Statt eines vorgegebenen Sprechermodells ist es aber auch möglich, aus den anfänglich oder zwischenzeitlich im Kommunikationsvorgang von der Person gesprochenen Sprachsignalen ein Sprechermodell zu erstellen, das bei der Authentifizierung von folgenden Sprachsignalen desselben Kommunikationsvorgangs verwendet wird. Zur Erstellung des Sprechermodells aus den anfänglich gesprochenen Sprachsignalen werden diese lang und zahlreich genug gewählt, so dass eine Einschwingphase durchlaufen wird, das heißt, dass das Sprechermodell eingestellt und Betonungswechsel und Wechsel in der Sprechweise der Person berücksichtigt werden. Zwar ist mit diesem Verfahren keine absolute Sprecherauthentifizierung möglich, wohl aber eine relative. Damit kann festgestellt werden, ob ein Sprecher während des Gesprächs wechselt, oder aber, welcher von mehreren Gesprächsteilnehmern gerade spricht. Über die zuerst genannte Alternative können beispielsweise Flugzeugentführungen erkannt werden, indem das Gespräch des Pilots mit dem Tower überwacht wird.

Der Kommunikationsvorgang kann dabei ein Gespräch etwa in Form eines Dialoges oder auch nur eine einseitige Spracheingabe von Informationen sein.

Weiterhin verwendet das Verfahren vorzugsweise einen Neuheitsdetektor, durch den ein Sprecherwechsel erkannt wird.

Der Neuheitsdetektor arbeitet insbesondere mit einer Latenzzeit. Das heißt, dass die Sprachsignale über einen vorgegebenen Toleranzzeitraum, nämlich die eingestellte Latenzzeit, von den Referenzmustern soweit abweichen dürfen, dass die Person eigentlich nicht authentifiziert wird. Erst wenn die Abweichung noch über die Latenzzeit hinaus anhält, gibt der Neuheitsdetektor aus, dass ein Sprecherwechsel stattgefunden hat. So werden kurzzeitige Wechsel in der Sprechweise der Person oder Unvollständigkeiten bei den Referenzmustern ausgeglichen.

Gemäß der Zielrichtung der Erfindung werden die Phrasen der Person nicht vorgegeben, sondern sie kann den von ihr zu äußernden Inhalt in freier Rede formulieren, ohne eine für die Authentifizierung notwendige Syntax einhalten zu müssen.

Entsprechend sind die Phrasen vorzugsweise freie und/oder fließende Rede.

Entsprechend der ursprünglichen Intention lässt sich das Verfahren besonders vorteilhaft einsetzen, wenn die Person mit Hilfe einer Telekommunikationseinrichtung, insbesondere einem Telefon, mit einem Kommunikationspartner kommuniziert und dazu die Sprachsignale über die Telekommunikationseinrichtung übermittelt werden.

Eine Anordnung, die eingerichtet ist, eines der zuvor beschriebenen Verfahren auszuführen, kann beispielsweise durch entsprechendes Einrichten und Programmieren einer Datenverarbeitungsanlage mit Eingabemitteln zur Eingabe von Sprachsignalen, Verarbeitungsmitteln zur Verarbeitung der Sprachsignale und Authentifizierungsmitteln zur fortwährenden Authentifizierung der Person realisiert werden. Eine solche Anordnung kann insbesondere über einen Anschluss an eine Telekommunikationseinrichtung verfügen oder eine solche Telekommunikationseinrichtung beinhalten.

Weitere wesentliche Vorteile und Merkmale der Erfindung ergeben sich aus der Beschreibung eines Ausführungsbeispiels anhand der Zeichnung. Dabei zeigt:

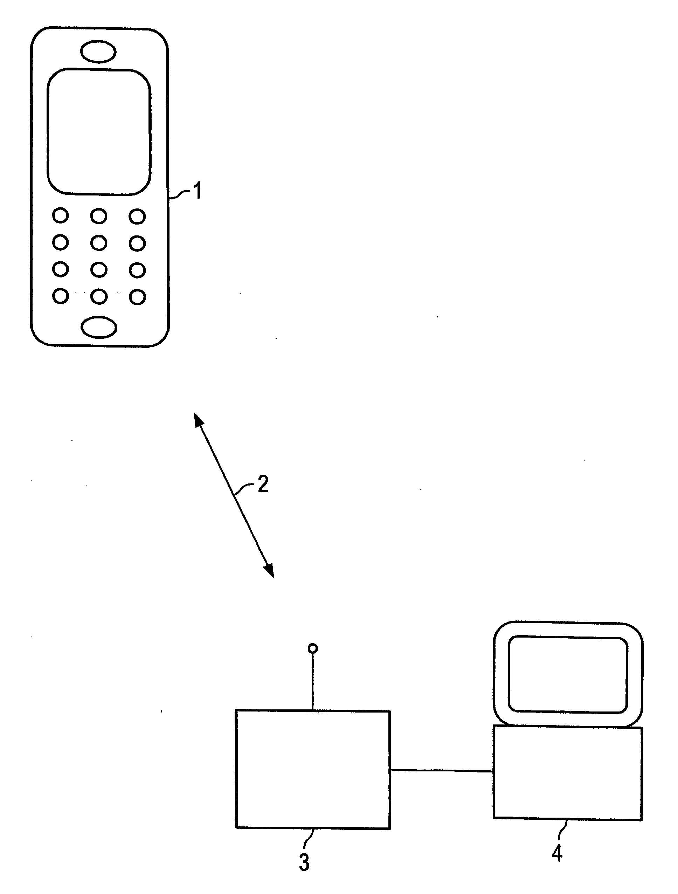

- Figur 1: eine Anordnung zur fortwährenden Authentifizierung einer Person in Verbindung mit einer Telekommunikationseinrichtung.

In Figur 1 erkennt man ein Mobiltelefon 1, das die Sprachsignale einer Person aufnimmt und über eine Funkübertragungsstrecke 2 zu einer Basisstation 3 übermittelt. Von hier werden die Sprachsignale zum Rechner 4 eines Callcenters weitergeleitet, der die Sprachsignale zum einen über Kopfhörer oder Lautsprecher ausgibt oder elektronisch weiterverarbeitet und zum anderen anhand der Sprachsignale eine Authentifizierung der sprechenden Person vornimmt.

Die Person ruft das Callcenter beispielsweise über das Mobiltelefon 1 an, um Versandhandelsbestellungen abzuwickeln oder Telefonbanking durchzuführen. Um einen Missbrauch durch Dritte auszuschließen, ist hier eine Authentifizierung der Person zwingend erforderlich.

Sobald die Verbindung aufgebaut ist und Sprachsignale, die die von der Person gesprochenen Phrasen wiedergeben, übertragen werden, wird die automatische Sprechererkennung auf dem Rechner 4 gestartet. In der Regel wird die Person dem Callcenter ihren Namen bzw. ihre Kundennummer nennen müssen, so dass anhand dieser Information eine Sprecheridentifikation erfolgen kann. Die festzustellende Identität der Person erhält man so oder alternativ mittels biometrischer Sprecheridentifikation, Spracherkennung über Erkennung des Namens oder der Kundennummer der Person, die in einer SmartCard oder einem anderen portablen Medium elektronisch gespeicherte Information oder beispielsweise eine geeignete Default-Annahme. Die Default-Aufnahme lässt sich beispielsweise beim Mobiltelefon 1 oder einem zusätzlich oder stattdessen genutzten PDA (Personal Digital Assistant) verwenden. Durch die Sprecheridentifikation, Spracherkennung, elektronisch gespeicherte Information oder Default-Annahme kann die erstmalige Identifizierung der Person erfolgen.

Das Ergebnis der Sprecheridentifikation wird bei der darauffolgenden Verifikation verwendet.

Das Ergebnis der fortwährenden Verifikation wird wiederum bei einem menschlichen Gesprächspartner am Rechner 4 in geeigneter Weise angezeigt bzw. einem Dialogsystem zur Verarbeitung übermittelt: War die Verifikation erfolgreich, so merkt die Person davon nichts; schlägt die Verifikation dagegen fehl, so können vom Dienstanbieter am Rechner 4 geeignete Maßnahmen ergriffen werden. Eine solche Maßnahme kann etwa darin bestehen, dass ein persönliches Erscheinen der Person erforderlich ist.

Die Authentifizierung erfolgt laufend im Hintergrund, das heißt ohne explizite Aufforderung, einen bestimmten Authentifizierungstext zu sprechen und nutzt die fließende, freie Rede der zu authentifizierenden Person während des Gespräches.

Dazu werden die Parameter eines Sprechermodells nach einer geeignet langen Einschwingphase laufend mit einem Neuheitsdetektor mit einer geeigneten Latenzzeit auf Abweichungen überprüft. Hierbei vergleicht der Neuheitsdetektor die Übereinstimmung der extrahierten Parameter mit denen des Sprechermodells.

Die Sicherheit der Sprechererkennung, das heißt Falschakzeptanzrate gegenüber Falschrückweisungsrate, kann je nach Einsatzszenario geeignet gewählt und/oder eingestellt werden.

Das Verfahren ist nicht auf eine einseitige Anwendung beschränkt, sondern kann auch dazu benutzt werden, um mehrere Gesprächspartner gegenseitig zu authentifizieren.

Auch beim Abhören von Telefonleitungen bietet sich das beschriebene Verfahren zur Authentifizierung der sprechenden Person an. Dadurch kann nicht nur sichergestellt werden, dass die richtige Person überwacht wird, sondern auch ein unberechtigtes Abhören unterbunden werden, wodurch ein Beitrag zum Datenschutz geleistet wird.

Da die Authentifizierung beim geschilderten Verfahren nicht nur einmalig am Anfang erfolgt, kann festgestellt werden, ob die Identität des Sprechers im Laufe des Gesprächs wechselt. So lassen sich beispielsweise Replay-Attacken abwehren, bei denen zur Authentifizierung eine Tonaufnahme eingespielt wird.

Allgemein bietet das Verfahren eine einfache und sichere Authentifizierung und Authentisierung: Statt Eingabe einer PIN oder dem Sprechen eines Kennwortes oder alternativ zusätzlich dazu erfolgt die Authentifizierung über eine Sprechererkennung in Form einer Sprecherverifikation und/oder Sprecheridentifikation. Somit kann die tatsächliche Identität der Person festgestellt werden.

Durch die permanente Authentifizierung ist die Identität der Person während des gesamte Gesprächs sichergestellt.

Auf einen speziell auf die Authentifizierung zugeschnittenen Dialogteil kann verzichtet werden.

Kennnummer oder Kennwort werden durch eine Biometrie in Form von Sprecheridentifikation und/oder Sprecherverifikation ersetzt. Damit wird nicht mehr Wissen abgefragt, das sich auch eine nicht berechtigte Person verschaffen kann, sondern es wird die Identität der Person anhand von Körpermerkmalen und charakteristischen Verhaltensweisen wie Klang und Dynamik der Stimme überprüft.

## Patentansprüche

1. Verfahren zur Authentifizierung einer Person,
- bei dem die Authentifizierung anhand von Sprachsignalen vorgenommen wird und
- bei dem die Person eine Vielzahl von Phrasen spricht,
**dadurch gekennzeichnet,**
**dass** die Authentifizierung an den für die Phrasen gesprochenen Sprachsignalen fortwährend vorgenommen wird.

2. Verfahren nach zumindest Anspruch 1,
**dadurch gekennzeichnet,**
**dass** die Authentifizierung an den für die Phrasen gesprochenen Sprachsignalen dadurch fortwährend vorgenommen wird, dass sie immer wieder vorgenommene wird.

3. Verfahren nach zumindest Anspruch 1,
**dadurch gekennzeichnet,**
**dass** die Authentifizierung an den für die Phasen gesprochenen Sprachsignalen dadurch fortwährend vorgenommen wird, dass sie ununterbrochen vorgenommen wird.

4. Verfahren nach zumindest einem der Ansprüche 1 oder 2,
**dadurch gekennzeichnet,**
**dass** die Authentifizierung an mindestens der Hälfte der für die Phrasen gesprochenen Sprachsignale vorgenommen wird.

5. Verfahren nach zumindest einem der vorhergehenden Ansprüche,
**dadurch gekennzeichnet,**
**dass** die Authentifizierung der Person für bestimmte Inhalte erforderlich ist und die Sprachsignale, anhand deren die Authentifizierung der Person vorgenommen wird, die Inhalte enthalten oder aus den Inhalten bestehen, die die Authentifizierung der Person erfordern.

6. Verfahren nach zumindest einem der vorhergehenden Ansprüche,
**dadurch gekennzeichnet,**
**dass** die Sprachsignale von der Person nicht ausschließlich zum Zwecke der Authentifizierung abgegeben werden.

7. Verfahren nach zumindest einem der vorhergehenden Ansprüche,
**dadurch gekennzeichnet,**
**dass** aus während eines Kommunikationsvorgangs gesprochenen früheren Sprachsignalen der Person ein Sprechermodell erstellt wird, das bei der Authentifizierung des Sprechers anhand von im Kommunikationsvorgang späteren Sprachsignalen verwendet wird.

8. Verfahren nach zumindest Anspruch 7,
**dadurch gekennzeichnet,**
**dass** aus den anfänglich gesprochenen Sprachsignalen der Person ein Sprechermodell erstellt wird, das bei der Authentifizierung von folgenden Sprachsignalen verwendet wird.

9. Verfahren nach zumindest einem der vorhergehenden Ansprüche,
**dadurch gekennzeichnet,**
**dass** über einen Neuheitsdetektor erkannt wird, ob ein Sprecherwechsel stattfindet.

10. Verfahren nach zumindest Anspruch 9,
**dadurch gekennzeichnet,**
**dass** der Neuheitsdetektor mit einer Latenzzeit arbeitet.

11. Verfahren nach zumindest einem der vorhergehenden Ansprüche,
**dadurch gekennzeichnet,**
**dass** die Phrasen der Person nicht vorgegeben werden.

12. Verfahren nach zumindest einem der vorhergehenden Ansprüche,
**dadurch gekennzeichnet,**
**dass** die Phrasen freie und/oder fließende Rede sind.

13. Verfahren nach zumindest einem der vorhergehenden Ansprüche,
**dadurch gekennzeichnet,**
**dass** die Person mit Hilfe einer Telekommunikationseinrichtung kommuniziert und dass die Sprachsignale über die Telekommunikationseinrichtung übermittelt werden.

14. Anordnung, die eingerichtet ist, ein Verfahren nach zumindest einem der Ansprüche 1 bis 13 durchzuführen.
